Europäisches Patentamt

European Patent Office

Office européen des brevets

(19)

(11) Publication number: **0 138 019**
**A2**

(12) **EUROPEAN PATENT APPLICATION**

(21) Application number: **84110489.6**

(22) Date of filing: **04.09.84**

(51) Int. Cl.⁴: **F 16 L 58/10, C 08 L 63/00**

(30) Priority: **06.09.83 DE 3332079**

(43) Date of publication of application: **24.04.85**
**Bulletin 85/17**

(84) Designated Contracting States: **DE FR GB NL SE**

(71) Applicant: **THE DOW CHEMICAL COMPANY, Dow Center 2030 Abbott Road Post Office Box 1967, Midland Michigan 48640 (US)**

(72) Inventor: **Rosinson, Richard Max, 2, Rue d'Arras, F-67000 Strassbourg (FR)**

(74) Representative: **Hann, Michael, Dr. et al, Patentanwälte Dr. Michael Hann Dr. H.-G. Sternagel Marburger Strasse 38, D-6300 Giessen (DE)**

(54) A method for protecting from corrosion the filled girthweld cutback area of a concrete coated pipe.

(57) The invention is a method for protecting from corrosion the filled girthweld cutback area of a concrete coated pipe, otherwise protected against corrosion by cathodic means. The method comprises coating the girthweld cutback area, after welding but prior to the filling operation, with an electroconductive film.

EP 0 138 019 A2

0138019

*(E-1644)*

# A METHOD FOR PROTECTING FROM CORROSION
## THE FILLED GIRTHWELD CUTBACK AREA
### OF A CONCRETE COATED PIPE

The present invention relates to a method for reducing the corrosion to a pipe in the area of a filled girthweld cutback; particularly, to reducing the corrosion of the filled girthweld concrete cutback area of a concrete coated pipe employed in sub-sea applications.

Steel pipes or other steel conduits employed in sub-sea applications are generally coated with a thin layer of polyethylene, epoxy coal tar, epoxy powder or the like, for protection against corrosion by the salt water environment. Subsequently, the pipe is coated with a relatively thicker layer of a dense material such as concrete to give it a "negative buoyancy" so that the pipe will remain on the ocean floor during use.

In general, the thin protective layer and concrete coating are applied on shore and the individual coated pipe sections are then loaded on a barge for subsequent welding and installation. To allow the welding

32,386-F                    -1-

of the individual sections to one another, a small portion of each end of the pipe, although having the protective layer, is not coated with concrete. Therefore, when welded, the joined pipe sections have an uncoated gap. To enable the pipe to enter the sea smoothly and to provide the joined pipe section with protection against physical and chemical damage once on the ocean floor, it is necessary to fill this girthweld concrete cutback. The materials conventionally employed in filling the girthweld concrete cutback include molten mastic and polyurethane.

In operation, should the thin protective layer coating the pipe become damaged, corrosion of the damaged area is effectively eliminated by means of cathodic protection. Specifically, a metal such as zinc or magnesium, which act as an anode, is placed at intervals along the length of the pipe outside the concrete coating. Due to the different reduction potentials between the zinc or magnesium and the steel, the zinc or magnesium corrodes preferentially to the steel, thereby protecting the pipe. This protection depends on the ability of a small electrical current to flow from the metal anodes to the damaged area. The ability of the concrete which coats the protected pipe to absorb salt water provides this necessary conductive path.

However, the materials such as molten mastic which are employed in filling the girthweld concrete cutbacks are not generally electroconductive and are also not permeable to salt water. Therefore, an electric current is not capable of being established between the area under the filled girthweld and the metal anode. In operation, if the protective layer under the filled girthweld is damaged, this lack of a conductive path between the damaged area and the anode will cause a breakdown in the cathodic protection means in the girthweld cutback area. This could result in the damaged area being further corroded, thereby resulting in a physical weakening of the pipe and/or leakage of the material being carried from the pipe or salt water into the pipe with an eventual failure of the pipe being possible.

Therefore, it is highly desirable to provide a method for protecting the filled girthweld concrete cutback of a pipe otherwise protected from corrosion by cathodic means, from corrosion due to the sea or salt water environment to which the coated pipe is exposed.

Accordingly, the present invention is a method for protecting from corrosion the filled girthweld concrete cutback area of a concrete coated pipe, otherwise protected against corrosion by a cathodic means. The method comprises coating the area of the girthweld cutback, after welding but prior to the filling operation, with an electroconductive film.

By coating the girthweld cutback area with an electroconductive film, an electrical current can be established between the metal anode and the area of the pipe under the filled girthweld concrete cutback. Therefore, in sub-sea applications, if the protective layer on the pipe somehow becomes damaged under the filled girthweld concrete cutback, the pipe in the area of the damaged protective layer is effectively protected against corrosion from the salt water environment.

0138019

In the practice of the present invention, the electroconductive film is preferably prepared by coating the girthweld cutback area with a liquid conductive coating composition comprising a particulate conductive material, an organic liquid carrier and a binder. The coating composition is resistant to the material employed in filling the girthweld concrete cutback and bonds to the thin protective layer on the pipe.

Conductive materials suitably employed herein are particulate materials (i.e., finely divided solids) which are capable of conducting an electrical current upon the formation of the conductive film on the surface of the girthweld cutback. Representative materials which can be employed in the practice of the present invention include graphite, either natural graphite or artificial graphite, and metals such as iron, aluminium or copper. Due to its ability to provide a constant conductivity in the described application regardless of the thickness of the conductive layer, graphite is the most preferred conductive material employed herein. In general, a powder or flake form of graphite is most· advantageously employed in preparing the conductive coating composition, with flaked graphite being preferred.

The graphite preferably possesses a particle size such that a more or less stable dispersion can be formed from the material. Although this size can vary depending on a variety of factors such as the liquid carrier, binder and conductive material employed and whether the composition contains a protective colloid, the graphite will exhibit an average particle size of less than 25, preferably less than 10, micrometers.

0138019

The liquid carrier employed in preparing the conductive coating composition is suitably an organic liquid which evaporates after application of the coating composition to the girthweld cutback area to form a continuous film of the conductive material and binder. In general, the organic liquid evaporates to allow the formation of a sensibly dry film in a desirably short time. Specifically, to provide an efficient pipe laying operation, the filling operation including any required setting and/or curing of the filler material, is advantageously completed in a relatively short time period of 10 to 15 minutes or less. Therefore, for efficient pipe laying operation, the organic liquid carrier advantageously evaporates in less than 5 minutes, preferably less than 3 minutes, at the temperatures encountered in a pipe laying operation (e.g., a temperature between 10°C and 35°C as supplemented by any heat remaining from the welding operation) to leave a sufficiently dry conductive layer to permit the subsequent filling of the girthweld cutback. In general, the organic liquid carrier is advantageously an organic liquid which exhibits a vapor pressure of at least 5 mm Hg (0.7 kPa) at 25°C.

Representative of the organic liquid carriers useful in preparing the conductive coating compositions of the present invention include aromatic liquids, preferably aromatic hydrocarbon liquids such as the alkyl substituted benzenes such as toluene and o-, m-, or p-xylene; aliphatic hydrocarbons such as hexane; aliphatic alcohols such as t-butanol; kerosene, terpentine; mineral spirits; glycol ethers such as ethyl glycol phenyl ether and ethylene glycol monobutyl ethyl acetate and mixtures thereof. The preferred organic liquid carriers are the aromatic hydrocarbon liquids, mixtures thereof, or a mixture of an aromatic hydrocarbon liquid and one or more other organic liquid miscible with the aromatic liquid. Most preferably, an aromatic hydrocarbon liquid such as toluene or m-, o-, or p-xylene or mixtures thereof are employed as the organic liquid carrier in the conductive coating composition.

The binder component of the conductive coating composition is suitably any film forming component such as a drying oil or synthetic resin which is capable of binding the conductive material and promoting adhesion of the conductive coating composition to the girthweld cutback. Many of the binders conventionally employed in the preparation of paints, varnishes or lacquers such as an alkyd resin (i.e., the product of a polybasic acid, including dibasic acids such as phthalic acid; a polyhydric alcohol such as glycerol or pentaerythritol; and a monobasic fatty acid or oil such as a monobasic acid derived from a natural oil, e.g., lauric or stearic acid); linseed oil, preferably a mixture of raw and heat bodied linseed oils and organic liquid soluble, derivatives of cellulose (which cellulosic derivative can also be employed as thickeners for the compositions) can suitably be employed herein. The binder component advantageously employed herein is soluble in the organic liquid carrier. The most preferred binder is an alkyd resin.

The amounts of the binder, organic liquid carrier and conductive material employed in preparing the conductive coating composition are dependent on a variety of factors including the specific binder, organic liquid carrier and conductive material employed; the desired conductivity of the resulting conductive coating and the specific end use application of the pipe material. Specifically, it is necessary that, after the application of the conducted coating composition to the girthweld cutback area and drying of the composition, the resulting coating conducts a sufficient electrical current for the specific end use application. Therefore, the conductive coating composition contains at least some minimum amount of the conductive material sufficient to provide conductivity. Such minimum amount will vary depending on the conductive material employed, its size and shape. In general, the coating composition will contain at least 5 weight percent of the conductive material, said weight percent being based on the total weight of the organic liquid carrier, conductive material and binder. When using the preferred graphite flakes, the conductive coating composition will advantageously contain from 5 to 40 weight percent of the graphite, based on the total weight of the conductive coating composition. The binder is employed in an amount sufficient to form a continuous film following evaporation of the carrier liquid. In general, the conductive coating composition will advantageously contain from 5 to 45 weight percent of the binder based on a total weight of the binder, conducted material and organic liquid carrier.

A preferred conductive coating composition comprises from 10 to 30 weight percent graphite flakes, from 8 to 30 weight percent of an alkyd resin and from 40 to 82 weight percent of the organic liquid carrier, said weight percents being based on the total weight of the alkyd resin, graphite flakes and organic liquid carrier.

The conductive coating can optionally contain various other adjuncts such as drying agents, protective colloids, thickeners, thinners and/or rheology control agents. For example, when using an alkyd resin as the binder, a drying agent such as lead, calcium or zirconium naphthanate is often advantageously employed as a drying agent.

The conductive coating composition can be applied to the girthweld cutback area using any of a variety of conventional coating techniques such as spraying or brushing. The thickness at which the conductive coating composition is applied to the girthweld cutback area is not particularly critical to the practice of the present invention provided the resulting conductive film exhibits the desired conductivity. Such thickness will vary depending on a number of factors including the specific composition of the conductive coating composition and the conductivity desired. In general, the girthweld cutback area is coated with a conductive film having a thickness of from 5 to 50, preferably from 10 to 35, micrometer (µm). Preferably, to maximize the effectiveness of the conductive coating in reducing corrosion, the entire girthweld cutback area is coated with a continuous film of the conductive coating composition, with the conductive coating advantageously extending for some short distance over the surface of the concrete covering the pipe adjacent the girthweld cutback area.

Following the application of the conductive coating to the girthweld cutback, but prior to further processing of the joined pipe sections (e.g., prior to the laying operation), the concrete cutback is filled.

In general, the organic liquid carrier is evaporated and the conductive coating dried prior to said filling operation. Once dry, the coated girthweld cutback can be filled using conventional techniques well known in the art. For example, a metal sleeve or mold can be placed over the girthweld concrete cutback and the sleeve filled with molten mastic which is cooled and solidified. Alternatively, the mold can be filled with a rigid polyurethane formulation which subsequently reacts in the girthweld concrete cutback area.

As an alternative to conventional techniques, it is most advantageous to fill the girthweld concrete cutback using the polymer composition and method described in German Patent Application No. 33 32 080.2, filed September 9, 1983. The polymer compositions described therein comprise a vinyl ester or unsaturated polyester resin, a free-radical initiator, capable of generating free radicals at a temperature from 10°C to 35°C, a transition metal free accelerator and a filler such as sand. Representative vinyl esters are the reaction products of an epoxy compound such as a glycidyl polyether of a polyhydric alcohol or polyhydric phenol, an epoxidized fatty acid or epoxidized novolac with an unsaturated carboxylic acid such as acrylic acid. Representative polyesters are the esterification reaction product of an unsaturated polycarboxylic acid with an esterifying agent such as an alkylene oxide or polyhydric alcohol. Preferably, the polymer composition is prepared using a vinyl ester, of which the reaction product of an acrylic or methacrylic acid with an epoxide prepared by the reaction of an epichlorohydrin with a polyhydric alcohol or polyhydric phenol, preferably a bisphenol, is most preferred. Representative free-radical initiators

0138019

include organic peroxides such as dibenzoyl peroxide, tertiary butylperoxydebenzoate, 1,1-bis tertiary butylperoxycyclohexane and tertiary butylperoxyacetate, with dibenzoyl peroxide being most preferred. Representative transition metal free accelerators include the amines, preferably the aromatic amines such as dialkyl aniline and N,N-dialkyl toluidene. The free-radical initiator is employed in an amount from 0.5 to 6, preferably from 1 to 5, weight percent and the accelerator is employed in an amount from 0.05 to 2, preferably from 0.1 to 1.5, weight percent based on the total weight of the unsaturated polyester of vinyl ester resin.

After filling of the girthweld concrete cutback, the joint pipe sections are laid using conventional techniques.

The following example is set forth to illustrate the invention and should not be construed to limit its scope. In the example, all parts and percentages are by weight unless otherwise indicated.

EXAMPLE

A mild steel pipe having an outside diameter of 115 millimeters (mm), a wall thickness of 7.5 mm and a length of 450 mm was cleaned, externally sand blasted and coated with a protective layer of an epoxy powder formulation which is then cured. A concrete coating of 30 mm thickness was then applied to the coated pipe. To simulate a joint, a gap of 100 mm in the middle of the pipe was left uncoated by the concrete. Prior to the deposition of the conductive coating composition unto the girthweld cutback, the pipe was heated in an oven to a temperature of approximately 120°C which is typically the pipe temperature after the welding operation. A conductive coating composition comprising graphite flakes, an alkyd resin as a binder and a mixture of aromatic hydrocarbon liquids was applied to the girthweld cutback at a thickness, when dried, of 20 micrometers. The coating on the girthweld cutback was sensibly dry within 5 minutes after application of the conductive coating composition. During the drying of the composition, a thin flexible mold was fitted around the gap in the concrete coated pipe sample and a filler composition prepared. The filler composition comprising 55 parts of a vinyl ester prepared by reacting 1 mole of a glycidyl polyether of 2,2-bis(4-hydroxyphenol) propane having an epoxy equivalent weight of 180 with 2 moles of acrylic acid and 45 parts styrene was mixed with 5 parts of a suspension containing 40 percent phlegmatiser and 60 percent dibenzoyl peroxide having a minimum active oxygen content of 2.6 percent, 0.37 parts of a dimethyl-paratoluidine accelerator and 600 parts of a sand filler. The mixing was carried out using a heavy duty spatula for about one minute at which time the filler was thoroughly wetted with the resin.

When the coating had dried, the filler composition was quickly poured into the mold until the mold became full. Having filled the mold, the filler composition was allowed to set for 5 minutes at room temperature. The mold was then removed without the filler sticking thereto.

At this time, the polymer concrete composition was solid and easily capable of maintaining its shape without support or additional reinforcement.

Moreover, the conductive coating covering the girthweld cutback and a limited portion of the surface of the concrete coating adjacent thereto was determined to be conductive. Due to this conductivity, if, in operation, the protective layer surrounding the pipe in the area of the filled, concrete cutback was to become damaged, the damaged area would be effectively protected against corrosion.

0138019

*Claims*

1.   A method for protecting from corrosion the filled girthweld concrete cutback area of a concrete coated pipe, otherwise protected against corrosion by a cathodic means, the method comprising coating the area of the girthweld cutback, after welding but prior to the filling operation, with an electroconductive film.

2.   The method of Claim 1 wherein the electroconductive film is prepared by coating the girthweld cutback area with a liquid conductive coating composition comprising a particulate conductive material, an organic liquid carrier and a binder.

3.   The method of Claim 2 wherein the particulate, conductive material is graphite.

4.   The method of Claim 3 wherein the graphite is employed in the form of flakes.

5.   The method of Claim 4 wherein the organic liquid carrier is an aromatic hydrocarbon liquid, a mixture of aromatic hydrocarbon liquids or a mixture of an aromatic hydrocarbon liquid and one or more other organic liquids miscible with the aromatic liquid.

0138019

6. The method of Claim 2 wherein the binder is an alkyd resin.

7. The method of Claim 4 wherein the conductive coating composition is comprised of from 5 to 40 weight percent of graphite flakes and from 5 to 45 weight percent of the binder, said weight percents being based on the total weight of the binder, graphite flakes and organic liquid carrier.

8. The method of Claim 7 wherein the conductive coating composition is comprised of from 10 to 30 weight percent graphite flakes, from 8 to 30 weight percent of an alkyd resin binder and from 40 to 82 weight percent of the organic liquid carrier, said weight percents being based on the total weight of the alkyd resin binder, graphite flakes and organic liquid carrier.

9. The method of Claim 7 wherein the film formed by the conductive coating composition has a thickness of from 5 to 50 micrometers.

10. The method of Claim 7 wherein after coating the girthweld cutback with the conductive coating composition but prior to further processing, the coated girthweld cutback is filled.